## Europäisches Patentamt
## European Patent Office
## Office européen des brevets

(19)

(11) Numéro de publication: **0 126 671**
**B1**

(12)

# FASCICULE DE BREVET EUROPÉEN

(45) Date de publication du fascicule du brevet:
**13.08.86**

(51) Int. Cl.⁴: **B 64 G 1/66**

(21) Numéro de dépôt: **84400869.8**

(22) Date de dépôt: **27.04.84**

(54) **Dispositif de fixation flexible d'une charge utile sur une surface de support, notamment d'un instrument de haute précision sur un engin spatial.**

(30) Priorité: **03.05.83 FR 8307352**

(43) Date de publication de la demande:
**28.11.84 Bulletin 84/48**

(45) Mention de la délivrance du brevet:
**13.08.86 Bulletin 86/33**

(84) Etats contractants désignés:
**CH DE GB IT LI**

(56) Documents cité:
**EP-A-0 062 584**
**FR-A-2 180 252**
**US-A-3 727 865**

(73) Titulaire: **AGENCE SPATIALE EUROPEENNE, 8-10, rue Mario Nikis, F-75738 Paris Cedex 15 (FR)**

(72) Inventeur: **Van der Laan, T.J.W., Zuiderlingedijk no 161, Spijk (ZH) (NL)**

(74) Mandataire: **Rodhain, Claude, Cabinet Claude Rodhain 30, rue la Boétie, F-75008 Paris (FR)**

LIBER, STOCKHOLM 1986

## Description

La présente invention concerne les dispositifs de fixation flexible permettant de monter une charge utile sur une surface de support, par exemple des instruments de haute précision sur la surface extérieure d'un engin spatial ou satellite. Ces dispositifs doivent être conçus de manière que les effets d'un déplacement relatif entre la charge utile et sa surface de support se trouvent réduits au maximum. Ils trouvent une grande variété d'applications telles que le montage sur un engin spatial d'instruments sensibles à de faibles déplacements du support.

Il se trouve en effet que, lorsqu'on monte un instrument à haute précision sur la surface extérieure d'un engin spatial, un problème est soulevé par le fait que, sous l'influence de l'environnement spatial, la surface de l'engin subit une dilatation ou une contraction d'origine thermique suivant un taux qui est différent de celui de la surface qui porte l'instrument.

Si l'instrument se trouve fixé par l'intermédiaire d'une monture rigide, la différence de dilatation thermique entre la surface de l'engin spatial et la surface de support de l'instrument peut conduire à un transfert de forces et de moments vers l'instrument par l'intermédiaire de la monture, et en conséquence à une déformation de cet instrument et une diminution de ses performances, en particulier lorsqu'il s'agit d'un élément optique tel qu'un miroir de télescope.

C'est ainsi que, si l'on envisage de monter un instrument à l'aide de trois montures du type en V renversé, tangentes au cercle qu'elles forment et qui constituent un ensemble statique, une dilatation supérieure de la surface de l'engin spatial conduit à un déplacement de la base d'au moins l'une des montures par rapport aux deux autres, et donc à une déformation de celle-ci et un transfert nuisible de forces et de moments à la partie de fixation de l'instrument, ce qui provoque une déformation locale inacceptable de ce dernier.

Il a déjà été proposé diverses réalisations constituées essentiellement par des montures dont les éléments de fixation sur l'instrument et sur la surface de support sont formés par des éléments dits "flexibles", soit du type pivotant (paliers ou charnières), soit du type à fléchissement (lames ou ressorts de torsion à faible contrainte) comme, par exemple, dans le document EP-A 62584 couvrant le préambule de la revendication 1.

Bien qu'ils présentent l'avantage d'offrir une flexibilité suivant plus d'un plan, les paliers ou charnières ont par contre pour inconvénient d'être sujets à des frottements internes, ce qui ne les rend pas exempts d'une certaine hystéresis. Il en résulte qu'à la suite d'une déviation à partir d'une position neutre, ils ne retournent pas dans cette position, ce qui, au repos, entraîne un décalage correspondant de la monture dont ils font partie et donc de l'instrument porté par celle-ci.

Quant aux lames (travaillant à la flexion) et aux ressorts de torsion (lames travaillant à la torsion), ils présentent l'inconvénient d'entraîner une réduction de la capacité de charge utile admissible pour une telle monture, ceci étant dû à leur résistance au flambage, ainsi qu'à une perte de rigidité axiale résultant de la présence locale de sections très minces.

Ainsi, les frottements internes ou l'épaisseur limitée des lames ne permettent pas une application pratique favorable des montures à éléments flexibles, qu'ils soient du type palier ou du type lame, et ceci du fait de l'induction de forces et moments ainsi crée.

C'est la raison pour laquelle des tentatives ont été faites de mettre au point des éléments à flexibilité dite "rotationnelle", c'est-à-dire offrant une flexibilité dans plus d'un plan, sur la base d'agencements de lames qui s'avèrent être extrêmement complexes, présentant un encombrement axial (c'est-à-dire suivant la direction allant de la surface de support vers l'instrument) qui est relativement important et qui, en tout état de cause, doivent comporter des parties de transition très rigides et massives, ce qui était jusqu'à ce jour impératif pour permettre un transfert convenable des charges axiales.

C'est pourquoi la présente invention a pour but de fournir un dispositif de fixation flexible d'une charge utile sur une surface de support, du type comprenant au moins une monture qui présente un axe orienté d'une partie de fixation de la surface de support vers une partie de fixation de la charge utile et qui comporte un élément flexible à flexibilité suivant plus d'un plan, ce dispositif devant permettre un compromis entre l'obtention d'une capacité de charge élevée et l'élimination de forces résiduelles internes, tout en assurant une liberté de rotation suivant trois plans respectivement orthogonaux et en offrant un encombrement minimal.

A cet effet, l'invention a pour objet un dispositif du type précité, caractérisé en ce que le ou chaque élément flexible comporte deux lames planes en matériau flexible solidaires l'une de l'autre et perpendiculaires entre elles, se recoupant suivant une ligne d'intersection qui constitue leur ligne de solidarisation et qui est parallèle audit axe principal de la monture, chacune de ces deux lames s'étendant latéralement sur au moins un côté à partir de ladite ligne d'intersection et solidarisation et étant fixée, suivant un bord opposé suivant une direction radiale perpendiculaire à cette ligne, sur une partie sensiblement verticale d'un élément de fixation destiné à être rendu solidaire de la partie de fixation respectivement de la surface de support et de la charge utile. Deux réalisations particulière des éléments de fixation sont décrites dans la revendication 7.

Grâce à cet agencement, les charges axiales, c'est-à-dire les charges dirigées suivant le dit axe principal de la monture, sont transmises de la partie de fixation de la charge utile dans la première lame qui y est associée, puis de celle-ci dans la seconde lame qui est associée à la partie de fixation de la surface de support, et enfin de cette seconde lame dans cette partie de fixation. De la sorte, les lames flexibles sont chargées en cisaillement. Par ailleurs, la flexibilité en rotation autour des deux autres axes, perpendiculaires à l'axe principal, correspondant aux deux directions radiales respectives des lames flexibles, se trouve fournie par la flexibilité en torsion de respectivement chacune de ces deux lames. Quant à la flexibilité en rotation autour de l'axe principal lui-même, elle est fournie par l'aptitude à la torsion de l'agencement perpendiculaire, ou en croix, des deux lames, dans le plan des deux axes radiaux. En effet, suivant un mode de réalisation particulier de l'invention, les deux lames flexibles peuvent s'étendre chacune de façon symétrique et coplanaire de part et d'autre de la ligne d'intersection et solidarisation de manière à offrir une section en croix, perpendiculairement à ladite ligne, chaque lame présentant deux bords de fixation sur deux parties sensiblement verticales de l'élément de fixation associé.

De manière particulièrement avantageuse, il peut être prévu que les deux lames s'étendent, suivant la direction de leur ligne d'intersection et solidarisation sur la même hauteur, avec des bords égaux et confondus suivant cette ligne. Cette disposition assure une transmission efficace des charges axiales sans nécessiter la présence de parties de transition dans l'élément flexible, et sans présenter la réduction correspondante de rigidité des dispositifs à lames flexibles connus. En outre, grâce à l'orientation croisée des deux lames, on peut obtenir les flexibilités voulues en rotation suivant les trois axes d'une manière beaucoup plus compacte que dans les dispositifs connus, ceci étant dû à la réduction de hauteur de chaque élément flexible.

De préférence également, les deux lames flexibles peuvent être réalisées en un alliage à base de titane du type Ti 6Al 4Va.

L'invention est présentée dans la description qui va suivre, à titre d'exemple non limitatif et en regard des dessins annexés sur lesquels:

- la fig. 1 représente de façon schématique une vue en perspective d'un dispositif de fixation suivant un mode de réalisation particulier conforme à l'invention à trois montures doubles à 120°;

- la fig. 2 représente schématiquement et vue de face une de ces montures doubles, avec chacune leurs deux éléments flexibles extrêmes;

- la fig. 3 représente une vue éclatée et en perspective de ces éléments flexibles;

- les fig. 4 et 5 illustrent, de manière exagérée, les déformations de flexibilité en rotation d'un tel élément flexible suivant les deux axes radiaux;

- la fig. 6 illustre un exemple de dimensionnement des lames flexibles;

- la fig. 7 représente une lame flexible simple équivalente au montage en croix des fig. 3 à 6.

Le dispositif représenté est destiné à permettre la fixation flexible d'une charge utile 1 schématisée sous une forme parallélépipédique, sur une surface de support 2 schématisée par un plan, la fixation se faisant suivant une direction principale D qui est perpendiculaire à la surface plane 2.

Ce dispositif comprend trois montures doubles 3, 3a et 3b qui sont disposées dans trois plans P, Q, R, perpendiculaires à la surface plane 2, et donc parallèles à la direction D et qui sont tangents à un même cercle 4 situé sur la surface de fixation inférieure de la charge utile 1, ces contacts des trois montures 3, 3a et 3b avec le cercle 4 étant disposés respectivement à 120° l'un par rapport à l'autre à partir du centre 4a de ce cercle.

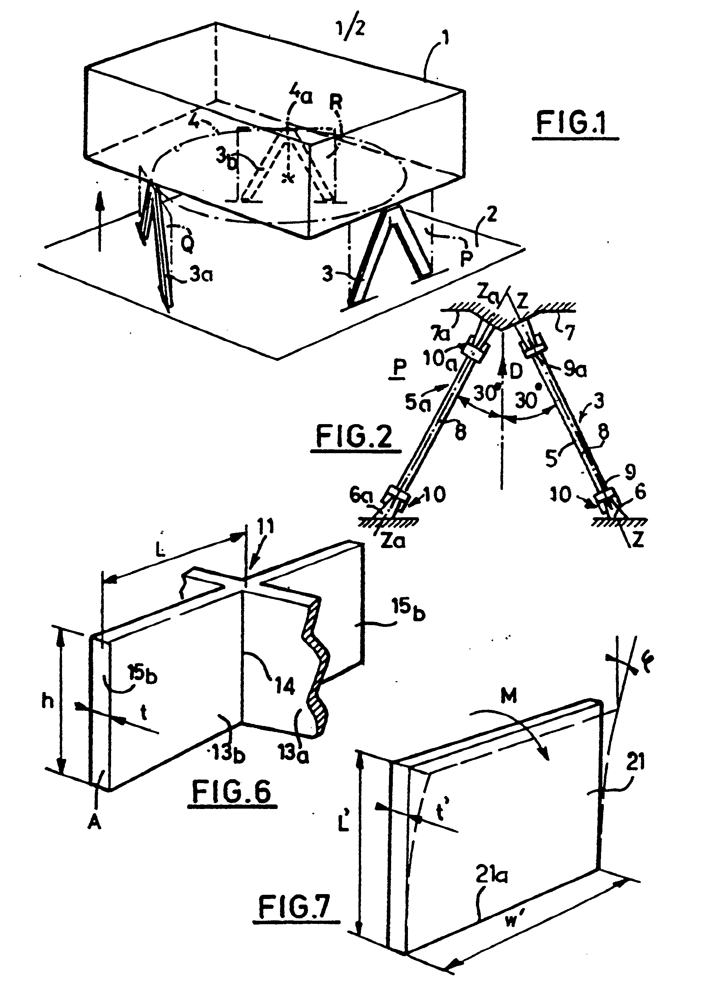

Comme le montre la fig. 2 qui représente une monture double 3, disposée suivant son plan P, les trois montures doubles étant identiques entre elles, cette monture double 3 est constituée par deux montures simples 5 et 5a qui sont orientées dans leur plan commun P chacune à 30° de part et d'autre de la direction générale D perpendiculaire à la surface de support 2 et à la charge utile 1, l'ensemble de la monture double 3 présentant ainsi une forme voisine d'un triangle équilatéral.

Chacune des deux montures simples 5 et 5a présente ainsi un axe principal Z, Z ou Za, Za faisant l'angle précité de 30° avec la direction D, et orienté d'une partie de fixation 6 ou 6a de la surface de support vers une partie de fixation 7 ou 7a de la charge utile.

Chaque monture simple 5 ou 5a est constituée par une jambe de force centrale rigide 8 orientée suivant l'axe Z-Z ou Za -Za et dont les extrémités présentent des parties de fixation respectives 9 et 9a recevant deux éléments flexibles 10 et 10a identiques.

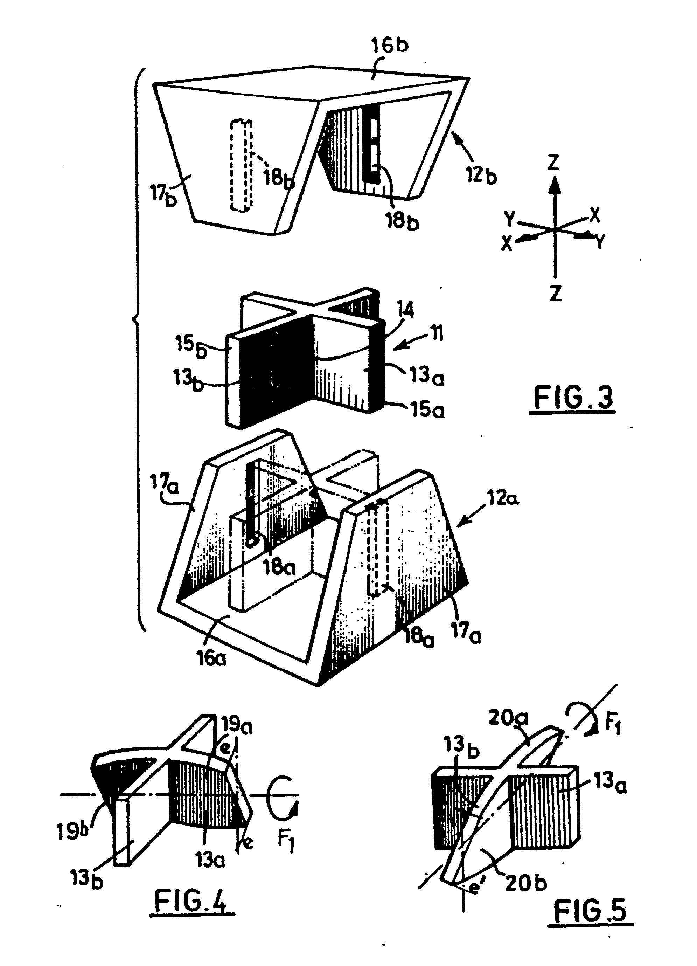

Comme le montre plus précisément la fig. 3, chaque élément flexible 10 ou 10a comprend un élément central ou croisillon 11 et deux éléments de fixation 12a et 12b. Ces éléments sont réalisés en un matériau présentant une bonne flexibilité, tel que par exemple le titane ou un alliage de titane comme l'alliage Ti 6Al 4Va.

L'élément central ou croisillon 11 est constitué de deux lames planes rectangulaires de mêmes dimensions et surfaces 13a et 13b, venues de matière et donc solidaires l'une de l'autre, ces lames étant perpendiculaires l'une à l'autre et se recoupant en leur milieu, sur toute leur hauteur commune h, suivant une ligne d'intersection ou solidarisation 14 qui est dirigée suivant l'axe principal Z-Z de la monture. Les deux lames ont une même épaisseur t et elles s'étendent latéralement de part et d'autre des deux côtés de la ligne d'intersection 14 suivant des directions radiales respectives X-X et Y-Y, qui sont perpendiculaires à la direction de l'axe principal Z-Z et elles-mêmes perpendiculaires entre elles. Ainsi, les deux parties latérales de chaque lame flexible s'étendent de façon symétrique et coplanaire de part et d'autre de la ligne 14, de manière à constituer pour l'élément 11 une section en croix perpendiculairement à la ligne d'intersection. La lame 13a présente, aux extrémités de ses deux parties latérales, deux bords rectilignes verticaux 15a et la lame 13b deux bords également verticaux 15b.

L'élément de fixation inférieur 12a, qui est par exemple destiné à être rendu solidaire de la partie de fixation 6 de la surface de support 2, est constitué par une ferrure à section en U présentant une base 16 carrée et deux parties ou ailes verticales 17a de forme trapézoïdale convergeant à l'opposé de la base 16a. La hauteur de ces ailes 17a est légèrement supérieure à la hauteur h du croisillon 11 et les deux bords 15a de la lame 13a de celui-ci sont encastrés dans deux entailles correspondantes verticales 18a ménagées à l'intérieur des ailes 17a.

L'élément de fixation supérieur 12b présente une forme et des dimensions identiques, mais se trouve renversé haut pour bas et déplacé en rotation de 90° dans le sens horizontal (plan X-Y), de sorte que sa base 16b peut être rendue solidaire de la partie de fixation 9 de la jambe de force 8 reliant cet élément flexible 10 à la partie de fixation 7 de la charge utile 1, tandis que par ailleurs les bords verticaux 15b de la seconde lame 13b du croisillon 11 sont encastrés dans les entailles verticales 18b des ailes trapézoïdales 17b de cet élément de fixation.

La forme trapézoïdale des ailes 17a et 17b permet aux deux éléments de fixation 12a et 12b de s'imbriquer aisément l'un dans l'autre, et l'ensemble de l'élément flexible 10 constitue un bloc extrêmement compact et de faibles dimensions, sa hauteur, suivant la direction Z-Z, n'étant pas très supérieure à la hauteur h du croisillon, tandis que ses deux autres dimensions suivant les axes radiaux X-X et Y-Y ne sont guère supérieures à 2 L si L est la dimension latérale ou radiale de chaque moitié de lame 13a ou 13b située de part et d'autre de la ligne d'intersection 14 du croisillon. Les éléments flexibles 10 ou 10a disposés aux extrémités des deux montures simples 5 ou 5a de chaque monture 3, 3a ou 3b, peuvent donc, tout en étant extrêmement compacts et d'encombrement réduit, transmettre très aisément les efforts axiaux orientés suivant les axes Z-Z ou Za-Za relatifs à chaque monture. Ces efforts sont en effet reportés de l'élément de fixation supérieur 12b sur la seconde lame 13b, de cette seconde lame 13b sur la première lame 13a et enfin de cette lame 13a sur l'élément de fixation inférieur 12a.

Si du fait des conditions de fonctionnement ou d'environnement, des déformations différentielles sont subies respectivement par la surface de support 2 et la charge utile 1, les forces et moments qui résultent de ces déplacements différentiels sont aisément absorbés et compensés par l'ensemble des montures prévues.

C'est ainsi par exemple que, comme le montre la fig. 4, un effort de flexion en rotation autour de l'axe Y-Y (flèche F1) se traduit par un gauchissement de la première moitié supérieure 19a de la lame 13a vers le haut et vers l'avant dans le sens de la flèche F1 et suivant la perspective de la fig. 4, tandis que l'autre moitié 19b de la lame 13a subit un gauchissement en sens inverse vers le bas et vers l'arrière, l'angle supérieur de la moitié 19a et l'angle inférieur de la moitié 19b subissant des écarts maximums e par rapport à la position plane de repos de la lame 13a.

De manière analogue, un effort de flexion en rotation (flèche F2) autour de l'axe X-X se traduit, comme le montre la fig. 5, par un gauchissement de la première moitié 20a de la lame 13b vers le haut et vers la droite et un gauchissement inverse de l'autre moitié 20b de cette lame vers le bas et vers la gauche, les angles respectivement supérieur et inférieur de ces deux moitiés subissant également des écarts maximaux e'.

A titre de simple exemple non limitatif, on peut examiner la rigidité que présente un ensemble de trois montures doubles telles que décrites plus haut, et dans lesquelles les éléments flexibles 10 ou 10a sont réalisés dans l'alliage de titane du type Ti 6Al 4Va pour lequel le module d'élasticité est $E = 113\,000$ N/mm2, le module de cisaillement $G = 43\,500$ N/mm2, la contrainte limite de cisaillement $\tau$ Lim $= 550$ N/mm2. Si l'on suppose que la masse de la charge utile est $m = 100$ kg, avec une accélération verticale de l'engin spatial porteur de cette charge de 20 g, si l'angle d'orientation des montures par rapport à la verticale est de 30° comme précédemment décrit et si l'on prévoit un facteur de sécurité à la limite $j = 1,5$, on en déduit que la charge axiale par support est de $N = 5\,660$ N. De cette valeur, on déduit que la section transversale minimale nécessaire pour chaque lame doit être de $A = 7,72$ mm2 (voir la fig. 6, qui montre les dimensions du croisillon 11).

Afin de tenir compte d'un flambement latéral, on prévoit un facteur de sécurité complémentaire $j = 1,5$, ce qui donne pour les lames une section transversale de $A = 11,6$ mm². Ainsi, pour éviter tout danger de flambement latéral des lames, la charge critique étant $N_{CR} = N/2 = 2830$ N, il en résulte que:

FIG1/20

Si l'on suppose une épaisseur de lame de $t = 0,8$ mm, la longueur L de chaque moitié de lame ne doit pas dépasser 11,1 mm et l'on peut par exemple choisir une valeur $L = 10$ mm.

Ainsi, si l'on suppose que les ferrures 12a et 12b présentent une rigidité maximale, donc théoriquement infinie, on peut établir que la rigidité axiale du croisillon 11 peut se calculer à partir d'une déflexion axiale due à une charge en cisaillement des lames $\delta_{Ax} = 0,084$ mm, de sorte que dans le cas de deux montures inclinées à 30°, il en résulte un déplacement axial $\delta_{Ax} = 0,388$ mm et donc une rigidité $K_{Ax}$ 51 550 N/mm ce qui correspond à une fréquence axiale pour les seules montures considérées de $fr_{Ax} = 114$ Hz. Cette valeur parait acceptable. De même, en partant d'une rotation due à un moment unitaire de 1 N.mm, l'angle $\varphi = 5,81 \cdot 10^{-5}$ rad.

Afin de vérifier ce que représente

matériellement cette valeur, on se reporte à une lame simple équivalente de forme rectangulaire telle que la lame 21 représentée sur la fig. 7 et qui serait encastrée à sa base 21a, avec application d'un moment unitaire M correspondant à l'angle $\varphi$ précédent. On en déduit que cette lame équivalente présenterait, en prenant une hauteur $L' = 20$ mm, une valeur de moment d'inertie de $I = 3,05$ mm$^4$. Une telle valeur se trouve offerte par une lame dont la section transversale présente une largeur $w' = 20$ mm et une épaisseur $t' = 1,22$ mm. Cette valeur relativement faible obtenue pour l'épaisseur prouve que la monture travaillant en torsion ne présente pas une rigidité de rotation excessive.

## Revendications

1°) Dispositif de fixation flexible d'une charge utile (1) sur une surface de support (2), du type comprenant au moins une monture (3, 3a, 3b) qui présente un axe (Z-Z, Za-Za) orienté d'une partie de fixation (6, 6a) de la surface de support (2) vers une partie de fixation (7, 7a) de la charge utile (1) et qui comporte au moins un élément flexible (10, 10a) à flexibilité suivant plus d'un plan, caractérisé en ce que l'élément flexible (10,10a) comporte deux lames planes (13a, 13b) en matériau flexible, solidaires l'une de l'autre et perpendiculaires entre elles, se recoupant suivant une ligne d'intersection (14) qui constitue leur ligne de solidarisation et qui est parallèle audit axe principal (Z-Z) de la monture (5), chacune de ces deux lames (13a, 13b) s'étendant latéralement sur au moins un côté à partir de ladite ligne d'intersection et solidarisation (14) et étant fixée, suivant un bord (15a, 15b) opposé suivant une direction radiale (X-X, Y-Y) perpendiculaire à cette ligne (14) sur une partie sensiblement verticale (17a, 17b) d'un élément de fixation (12a, 12b) destiné à être rendu solidaire de la partie de fixation (6, 6a-7, 7a) respectivement de la surface de support (2) et de la charge utile (1).

2°) Dispositif selon la revendication 1, caractérisé en ce que les deux lames flexibles (13a, 13b) s'étendent chacune de façon symétrique et coplanaire de part et d'autre de la ligne d'intersection et solidarisation (14) de manière à offrir une section en croix perpendiculairement à ladite ligne (14), chaque lame (13a, 13b) présentant deux bords (15a, 15b) de fixation sur deux parties sensiblement verticales de l'élément de fixation associé.

3°) Dispositif selon l'une quelconque des revendications 1 et 2, caractérisé en ce que les deux lames (13a, 13b) s'étendent suivant la direction de leur ligne d'intersection et solidarisation (14) sur la même hauteur (h) avec des bords égaux et confondus suivant cette ligne (14).

4°) Dispositif selon l'une quelconque des revendications 1 à 3, caractérisé en ce que le ou les bords de fixation (15a, 15b) de chaque lame (13a, 13b) sont rectilignes et parallèles à la ligne d'intersection et solidarisation (14).

5°) Dispositif selon l'une quelconque des revendications 1 à 4, caractérisé en ce que chaque lame flexible (13a, 13b) est une plaque rectangulaire de faible épaisseur.

6°) Dispositif selon l'une quelconque des revendications 2 et 3 à 5, lorsque celles-ci dépendent de la revendication 2, caractérisé en ce que les deux lames (13a, 13b) présentent une même dimension (L) perpendiculairement à la ligne d'intersection et solidarisation (14).

7°) Dispositif selon l'une quelconque des revendications 1 à 6, caractérisé en ce que chaque élément de fixation (12a, 12b) présente la forme d'une ferrure à section en L ou en U, la ou les ailes (17a, 17b) de cette ferrure recevant le ou les bords (15a, 15b) de la lame associée (13a, 13b).

8°) Dispositif selon la revendication 7, caractérisé en ce que la base (16a, 16b) de chaque ferrure (17a, 17b) est carrée et sa ou ses parties verticales (17a, 17b) de forme trapézoïdale convergent à l'opposé de ladite base (16a, 16b).

9°) Dispositif selon l'une quelconque des revendications 1 à 8, caractérisé en ce que les deux lames flexibles (13a,13b) sont venues de matière.

10°) Dispositif selon l'une quelconque des revendications 1 à 9, caractérisé en ce que les deux lames flexibles (13a, 13b) sont encastrées à force dans les parties verticales (17a, 17b) des éléments de fixation (12a, 12b).

11°) Dispositif selon l'une quelconque des revendications 1 à 10, caractérisé en ce que les deux lames flexibles (13a, 13b) sont réalisées en un alliage à base de titane du type Ti 6Al 4Va.

12°) Dispositif selon l'une quelconque des revendications 1 à 11, caractérisé en ce que plusieures montures (3, 3a, 3b) sont utilisées et chaque monture (3, 3a, 3b) est constituée par une jambe de force rigide (8) à chacune des extrémités (9, 9a) de laquelle sont fixés deux éléments flexibles (10, 10a) du type précité et solidaires respectivement des parties de fixation (6, 6a-7, 7a) de la surface de support (2) et de la charge utile (1)

13°) Dispositif selon la revendication 12, caractérisé en ce que chaque monture (3, 3a, 3b) comprend deux jambes de force (8) munies de deux éléments flexibles (10, 10a) et orientées dans leur plan commun (P, Q, R) chacune à environ 30° de part et d'autre de la direction générale (D) perpendiculaire à la surface de support (2) et à la charge utile (1).

14°) Dispositif selon la revendication 13, caractérisé en ce qu'il comprend trois montures (3), dont les plans communs (P, Q, R) sont orientés respectivement à 120° chacun par rapport aux deux autres.

**Patentansprüche**

1. Vorrichtung zur flexiblen Fixierung einer Nutzlast (1) auf einer Tragfläche (2), bestehend aus mindestens einem Gestell (3, 3a, 3b), das eine Achse (Z-Z, Za-Za) aufweist, die orientiert ist als Befestigungsabschnitt (6, 6a) der Tragfläche (2) gegen einen Befestigungsabschnitt (7, 7a) der Nutzlast (1) und die aus mindestens einem flexiblen Element (10, 10a) besteht, das mehr als einer Ebene folgt, dadurch gekennzeichnet, daß das flexible Elment (10, 10a) aus zwei ebenen Platten (13a, 13b) aus flexiblem Material besteht, die zueinander gehören und rechtwinklig zueinander verlaufen und sich in einer Schnittlinie (14) schneiden, die deren Vereinigungsgerade bildet und die zur Achse (Z-Z) des Gestelles (5) parallel verläuft, wobei sich jede der beiden Platten (13a, 13b) seitlich auf mindestens einer Seite, ausgehend von der Vereinigungsgeraden (14), erstreckt und ausgehend von gegenüberliegenden Rändern (15a, 15b) in radialer Richtung (X-X, Y-Y), senkrecht zur Geraden (l4) auf einem im wesentlich vertikalen Abschnitt (17a, 17b) eines Befestigungselementes (12a, 12b) befestigt ist, für die wechselseitige Haftung zum Befestigungsabschnitt (6, 6a-7, 7a) der Tragfläche (2) und der Nutzlast (1).

2. Vorrichtung nach Anspruch 1, dadurch gekennzeichnet, daß jede der beiden flexiblen Platten (13a, 13b) symmetrisch und koplanar zur Schnittlinie (14) derart verläuft, daß sie in bezug auf die Linie (14) ein rechtwinkliges Kreuz bilden, wobei jede Platte (13a, 13b) zwei Ränder (15a, 15b) aufweist zur Befestigung auf zwei im wesentlichen vertikalen Teilen des zugeordneten Befestiguhgselementes.

3. Vorrichtung nach einem der Ansprüche 1 und 2, dadurch gekennzeichnet, daß die zwei Platten (13a, 13b) der Richtung ihrer Schnitt- und Vereinigungslinie (14) auf gleicher Höhe (h) folgen, wobei die Ränder gleich und gemeinsam der Linie (14) folgen.

4. Vorrichtung nach einem der Ansprüche 1 bis 3, dadurch gekennzeichnet, daß der Rand oder die Ränder (15a, 15b) zur Fixierung jeder Platte (13a, 13b) geradlinig und parallel zur Schnittlinie (14) sind.

5. Vorrichtung nach einem der Ansprüche 1 bis 4, dadurch gekennzeichnet, daß jede flexible Platte (13a, 13b) eine rechtwinklige Platte mit geringer Stärke ist.

6. Vorrichtung nach einem der Ansprüche 2 und 3 bis 5 in Abhängigkeit von Anspruch 2, dadurch gekennzeichnet, daß die zwei Platten (13a, 13b) die gleiche Dimension (L) rechtwinklig zur Schnittlinie (14) aufweisen.

7. Vorrichtung nach einem der Ansprüche 1 bis 6, dadurch gekennzeichnet, daß jedes Befestigungselement (12a, 12b) die Form eines im Querschnitt L- oder U-förmigen Beschlages hat, wobei die Flügel (17a, 17b) des Beschlages den Rand oder die Ränder (15a, 15b) der zugeordneten Platte (13a, 13b) aufnehmen.

8. Vorrichtung nach Anspruch 7, dadurch gekennzeichnet, daß die Basis (16a, 16b) jeden Beschlages (17a, 17b) ein Karee ist und daß ihr oder ihre vertikalen Teile (17a, 17b) trapezförmig sind, die konvergierend von der Basis (16a, 16b) ausgehen.

9. Vorrichtung nach einem der Ansprüche 1 bis 8, dadurch gekennzeichnet, daß die zwei flexiblen Platten (13a, 13b) aus dem selben Materialstück hergestellt sind.

10. Vorrichtung nach einem der Ansprüche 1 bis 9, dadurch gekennzeichnet, daß die zwei flexiblen Platten (13a, 13b) in den vertikalen Teilen (17a, 17b) der Befestigungselemente (12a, 12b), eingespannt sind.

11. Vorrichtung nach einem der Ansprüche 1 bis 10, dadurch gekennzeichnet, daß die zwei flexiblen Platten (13a, 13b) gebildet sind durch eine Mischung auf Basis von Titan des Typs Ti 6Al 4Va.

12. Vorrichtung nach einem der Ansprüche 1 bis 11, dadurch gekennzeichnet, daß mehrere Gestelle (3, 3a, 3b) vorhanden sind und jedes Gestell (3a, 3b) gebildet ist durch ein starres Standbein (8), an dessen Enden (9, 9a) zwei flexible Elemente (10, 10a) der vorerwähnten Art und diese wechselseitig in bezug auf die Befestigungsbereiche (6, 6a-7, 7a) der Tragfläche (2) und der Nutzlast (1) angeordnet sind.

13. Vorrichtung nach Anspruch 12, dadurch gekennzeichnet, daß jedes Gestell (3, 3a, 3b) zwei Standbeine (8), ausgerüstet mit zwei flexiblen Elementen (10, 10a), aufweist, von denen jedes orientiert in ihrer gemeinsamen Ebene (P, Q, R) und in bezug auf ihre zur Tragfläche (2) und zur Nutzlast gegebenen Allgemeinrichtung (D) unter einem Winkel von etwa 30° verläuft.

14. Vorrichtung nach Anspruch 13, dadurch gekennzeichnet, daß sie drei Gestelle (3) aufweist, deren gemeinsame Ebenen (P, Q, R) in bezug auf die der jeweils beiden anderen um 120° versetzt sind.

**Claims**

1. A device for the flexible mounting of a useful load (1) on a supporting surface (2), of the type comprising at least one mounting (3, 3a, 3b) having an axis (Z-Z, Za-Za) extending from a fastening part (6, 6a) of the supporting surface (2) towards a fastening part (7, 7a) of the useful load (1), and having at least one flexible element (10, 10a), which is flexible in more than one plane, characterised in that the flexible element (10, 10a) comprises two plane plates (13a, 13b) of flexible material, which are integral with one another and perpendicular with respect to one another, and which cut across one another along a line of intersection (14), which forms their line of connection and which is parallel to the said main axis (Z-Z) of the mounting (5), each of the two plates (13a, 13b) extending laterally on at least one side from the said line of intersection and connection (14), and being secured, along an opposite edge (15a, 15b) lying in a radial direction (X-X, Y-Y), which is perpendicular to the said line (14), to a substantially vertical part (17a, 17b) of a fastening element (12a, 12b), which is designed to be made integral with the fastening part (6, 6a-7, 7a) of the supporting surface (2) and of the useful load (1) respectively.

2. A device according to claim 1, characterised in that the two flexible plates (13a, 13b) each extend in a symmetrical and coplanar manner on either side of the line of intersection and connection (14), so as to present a cross-shaped section which is perpendicular to the said line (14), each plate (13a, 13b) having two edges (15a, 15b) for securing to two substantially vertical parts of the associated fastening element.

3. A device according to any one of claims 1 and 2. characterised in that the two plates (13a, 13b) extend in the direction of their line of intersection and connection (14) to the same height (h), with edges, which are equal and which merge along the said line (14).

4. A device according to any one of claims 1 to 3. characterised in that the fastening edge or edges (15a, 15b) of each plate (13a, 13b) are rectilinear and parallel to the line of intersection and connection (14).

5. A device according to any one of claims 1 to 4, characterised in that each flexible plate (13a, 13b) is a rectangular plate having a small degree of thickness.

6. A device according to any one of claims 2 and 3 to 5, when the latter are dependent upon claim 2, characterised in that the two plates (13a, 13b) are of the same dimension (L) perpendicular to the line of intersection and connection (14).

7. A device according to any one of claims 1 to 6, characterised in that each fastening element (12a, 12b) is in the form of an iron fitting with a U-section, the flange or flanges (17a, 17b) of the said iron fitting receiving the edge or edges (15a, 15b) of the associated plate (13a, 13b).

8. A device according to claim 7, characterised in that the base (16a, 16b) of each iron fitting (17a, 17b) is square and its vertical part or parts (17a, 17b), which have a trapezoidal shape, converge opposite the said base (16a, 16b).

9. A device according to any one of claims 1 to 8, characterised in that the two flexible plates (13a, 13b) are made integral from same material piece.

10. A device according to any one of claims 1 to 9, characterised in that the two flexible plates (13a, 13b) are forcibly embedded in the vertical parts (17a, 17b) of the fastening element (12a, 12b).

11. A device according to any one of claims 1 to 10, characterised in that the two flexible plates (13a, 13b) are formed from an alloy with a titanium base of the type Ti 6Al 4Va.

12. A device according to any one of claims 1 to 11, characterised in that a plurality of mountings (3, 3a, 3b) are used and each mounting (3, 3a, 3b) is formed from a rigid strut (8), to each end (9, 9a) of which are secured two flexible elements (10, 10a) of the type mentioned above, which are integral with the fastening parts (6, 6a-7, 7a) of the supporting surface (2) and of the useful load (1) respectively.

13. A device according to claim 12, characterised in that each mounting (3, 3a, 3b) comprises two struts (8), which are provided with two flexible elements (10, 10a) and which are positioned in each case in their common plane (P, Q, R) approximately 30° either side of the main direction (D), which is perpendicular to the supporting surface (2) and the useful load (1).

14. A device according to claim 13, characterised in that it comprises three mountings (3), the common planes (P, Q, R) of which are arranged 120° from the two other planes in each case.

FIG.1

FIG.2

FIG.6

FIG.7

FIG.3

FIG.4

FIG.5